# EUROPÄISCHE PATENTSCHRIFT

(11) **EP 2 255 980 B1**
(45) Veröffentlichungstag und Bekanntmachung des Hinweises auf die Patenterteilung: **08.08.2012**
(21) Anmeldenummer: 09161209.3
(22) Anmeldetag: 27.05.2009
(51) Int. Cl.: B60G 15/06, F16F 3/093, B60G 7/04, F16F 9/58

(54) **Radaufhängung**
Wheel suspension
Suspension de roue

(43) Veröffentlichungstag der Anmeldung: 01.12.2010
(73) Patentinhaber: Ford Global Technologies, LLC, Dearborn, MI 48126 (US)
(72) Erfinder: Weshendorff, Joerg, 58452, WITTEN (DE)
(74) Vertreter: Drömer, Hans-Carsten

(56) Entgegenhaltungen:
- FR-A- 2 851 500
- GB-A- 2 214 607
- US-A- 5 467 970
- US-A1- 2006 043 659
- US-A1- 2006 279 031
- US-A1- 2008 136 076

## Beschreibung

Die Erfindung betrifft eine Radaufhängung für ein Kraftfahrzeug mit den Merkmalen des Oberbegriffs des Anspruchs 1, die einen unteren Lenker zur Anbringung eines Rades und eine Schraubenfeder aufweist, deren ein Ende in einer Federaufnahme am Lenker und das dazu gegenüberliegende Ende an einem Federteller angeordnet ist, wobei die Radaufhängung ein Zusatzfederelement aufweist.

Die US 5,467,970 A1 beschreibt ein Zusatzfederelement mit den Merkmalen des Oberbegriffs des Anspruchs 1, wobei das Zusatzfederelement ein erstes, starres Tragelement und ein zweites, starres Tragelement aufweist. Das zweite Tragelement ist als Einsatz in das erste Tragelement eingesetzt. In das aus dem ersten und dem zweiten Tragelement zusammengesetzten Tragbauteil ist ein nachgiebiges Dämpfungselement eingesetzt, welches aus zwei Teilkomponenten, nämlich dem ersten Teil und dem zweiten Teil besteht. Das zweite Teil ist aus einem Gummi gebildet, und in das erste Teil eingesetzt, wobei das erste Teil aus einem PU gebildet ist. Das Tragbauteil umfasst mit seinem zylindrisch ausgeführten Mantel das erste Teil an dem geschlossenen Ende. Mit dem Kontakt des äußeren Teils mit der zugeordneten Vertiefung des unteren Federsitzes beginnt die Kompression. Sobald die Kompression beginnt, wird das erste Teil zusammengedrückt, wobei die Nuten bzw. Freiräume gefüllt werden. Sind diese gefüllt, wirkt das zweite Teil, welches indirekt eine Kraft auf die zylindrische Wand ausübt.

Insbesondere für die Hinterräder von Kraftfahrzeugen sind Einzelradaufhängungen bekannt, bei welchen die Räder an einem "unteren" (Quer-)Lenker angebracht sind. Zur Dämpfung von Übertragungen von Geräuschen und Schwingungen auf die Karosserie wird der untere Lenker dabei häufig nicht direkt an der Karosserie befestigt, sonder an einem Fahrschemel (Zwischengestell/Hilfsrahmen), welcher seinerseits über Gummilager am Längsträger der Karosserie befestigt ist. Des Weiteren ist bei einer derartigen Radaufhängung eine Schraubenfeder am unteren Lenker gelagert, deren oberes Ende sich über einen Federteller am Fahrschemel abstützt.

Es ist bekannt, in eine Radaufhängung für ein Kraftfahrzeug mit einer Schraubenfeder ein Zusatzfederelement vorzusehen. Diese Zusatzfederelemente ermöglichen die Federprogression der Radaufhängung bzw. der Schraubenfeder einzustellen bzw. zu verändern, um den Federweg zu begrenzen, so dass das Rad vor einem Anschlagen an anderen Komponenten des Fahrzeuges weitgehend geschützt ist. Hierzu ist in Zusammenwirken mit dem Zusatzfederelement ein Anschlagelement vorgesehen, welches als separates Bauelement an von dem Zusatzfederelement entfernten Orten angeordnet ist. Bei einigen Aufhängungskonzepten ist es dagegen z.B. aus Bauraumgründen nicht möglich ein solches separates Anschlagelement vorzusehen.

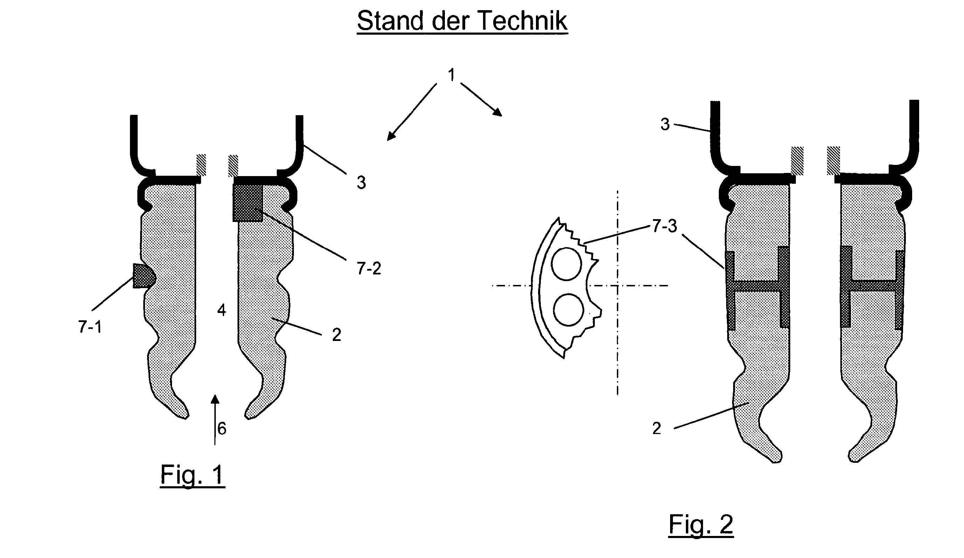

Die Figuren 1 und 2 zeigen verschiedene Ausführungsformen von Zusatzfederelementen 1 nach dem Stand der Technik.

Das in der Figur 1 im Längsschnitt gezeigte Zusatzfederelement 1 besteht im Wesentlichen aus einem federnden Element 2 aus Polyurethan, das an einem Federtopf 3 angeordnet und in einem Teller 5, welcher dem Federtopf 3 zugeordnet ist, gehalten ist. Das federnde Element 2 weist einen axial durchgehende Kanal 4 auf, durch den ein Zugseil geführt werden kann. Die Richtung in der das Zugseil durch das Zusatzfederelement 1 geführt werden kann ist durch den Pfeil 6 dargestellt. Zusätzlich kann das federnde Element 2 bewegungsbegrenzende Elemente 7-1, 7-2 und 7-3 aus Gummi oder Plastik bzw. hartem Kunststoff aufweisen. Diese bewegungsbegrenzenden Elemente 7-1, 7-2 (Figur 1) und 7-3 (Figur 2) können an verschiedenen Stellen des federnden Elements 2 angeordnet sein. Sie dienen dazu, wie das in der Figur 1 gezeigte Element 7-1, eine Verbreiterung des federnden Elements 2 zu begrenzen oder, wie das Element 7-2, um die wirkende Länge des federnden Elements 2 zu begrenzen.

Die Figur 2 zeigt einen Längsschnitt durch eine weitere Ausführungsform des Zusatzfederelements 1, bei dem das federnde Element 2 als Polyurethanschaum ausgebildet ist, der durch das bewegungsbegrenzende Element 7-3 in Form eines "Korsetts" gestützt wird. Das bewegungsbegrenzende Element 7-3 ist als Ausschnitt ebenfalls in einer Aufsicht dargestellt.

Die bewegungsbegrenzenden Elemente 7-1, 7-2 und 7-3 können an unterschiedlichen Positionen in oder an dem federnden Element 2 angeordnet sein. Bei dem in Figur 1 dargestellten Ausführungsbeispiel ist das Element 7-1 als Ring in einer entsprechenden Außennut aufgenommen. Das Element 7-2 ist kopfseitig in einer entsprechenden Innennut aufgenommen. Die Elemente 7-1, 7-2 und 7-3 bestehen jeweils aus einem harten Plastik bzw. Hartgummi.

Zudem sind Anschlagelemente, welche als Anschlagbegrenzer ausgeführt sind, als separate Komponente entfernt von dem Zusatzfederelement vorgesehen, und von daher in den Figuren 1 und 2 nicht dargestellt.

Der Erfindung liegt die Aufgabe zugrunde, eine Radaufhängung der eingangs genannten Art, insbesondere das Zusatzfederelement mit einfachen Mitteln so zu verbessern, dass eine gewünschte Federprogression eingestellt werden kann, wobei gleichzeitig ein Anschlagen des Rades an Fahrzeugkomponenten, wie z.B. an dem Radkasten vermeidbar ist.

Erfindungsgemäß wird die Aufgabe durch eine Radaufhängung, bzw. mit einem Zusatzfederelement mit den Merkmalen des Anspruchs 1 gelöst, welches dreistufig wirkend aus einer ersten, zweiten und dritte Wirkstufe gebildet ist, wobei die erste Wirkstufe aus einem Kunststoffschaum gebildet ist, und mit einer zweiten Wirkstufe verbunden ist, die aus einem bezogen auf die erste Wirkstufe härteren Material gebildet ist, wobei die zweite Wirkstufe mit der dritten Wirkstufe in Verbindung steht, die aus einem Metall gebildet ist, wobei die erste Wirkstufe die zweite Wirkstufe zumindest abschnittsweise umfasst, welche die dritte Wirkstufe vollumfänglich umfasst, wobei die dritte Wirkstufe als Metall-an-Metall Kontakt wirkt, wenn diese mit der Federaufnahme in Kontakt kommt, so dass ein Federweg begrenzt ist.

Das Zusatzfederelement ist vorzugsweise unterhalb eines Tellers bzw. eines Federtopfes mittig in der Schraubenfeder angeordnet, und hinreichend mit diesen Komponenten verbunden.

Die erste Wirkstufe des Zusatzfederelementes wird durch die Kunststoffschaumkomponente gebildet. Im Einfederfalle der Radaufhängung wird die erste Wirkstufe zusammengepresst. Die erste Wirkstufe bewirkt eine erste Federprogression zusätzlich zu der Federprogression der Schraubenfeder, wobei die erste Wirkstufe quasi ein weiches Federgefühl bewirkt. Die erste Wirkstufe ist in ihrer Progessionswirkung abhängig von der zweiten und dritten Wirkstufe einstellbar. Natürlich könnte auch die zweite Wirkstufe abhängig von der ersten Wirkstufe eingestellt werden.

Die Kunststoffschaumkomponente besteht vorzugsweise aus Polyurethan (PU). Es ist aber auch denkbar andere dem Fachmann bekannte Kunststoffe zu verwenden, die ähnliche Eigenschaften wie Polyurethan aufweisen. Das verwendete Polyurethan ist dabei weicher als das Material der Hartgummikomponente.

Ist die erste Wirkstufe maximal zusammengedrückt bzw. komprimiert, so bewirkt die zweite Wirkstufe eine zusätzliche Federprogression.

Die zweite Wirkstufe wird durch die Gummikomponente gebildet, die den größten Teil, der auf das Zusatzfederelement wirkenden Kraft aufnimmt.

Bevorzugt besteht die Gummikomponente aus Hartgummi. Ein geeigneter Hartgummi ist härter ist als der Kunststoffschaum aus dem die erste Wirkstufe gebildet ist.

Die zweite Wirkstufe weist zumindest ein Rastmittel zum Verrasten mit zumindest einem Gegenrastmittel der ersten Wirkstufe auf. In bevorzugter Ausgestaltung weist die zweite Wirkstufe einen im Wesentlichen konusförmig ausgeführten Abschnitt auf, der sich unter Belastung weitet und ein Abtrennen bzw. Ablösen von der ersten Wirkstufe verhindert.

Die Härte des Kunststoffschaums der Kunststoffkomponente und die Härte des Gummis der Hartgummikomponente sind vorzugsweise entsprechend der zu erzielenden Federprogression ausgewählt. Da ein Endanschlag vermieden werden soll, müssen die Kunststoff- und die Hartgummikomponente eine Federwirkung aufweisen, welche zu harte Stöße abfedert. Gleichzeitig darf die Federung aber nicht zu hart werden. Deshalb kann die Härte der verwendeten Kunststoffe bzw. des Hartgummis in Bezug auf die maximale oder auf ein vielfaches der maximalen Achslast ausgewählt werden. Wesentlich ist, dass der verwendete Hartgummi eine größere Härte aufweist, als der verwendete Kunststoff (zum Beispiel Polyurethan).

Die dritte Wirkstufe wird durch die Metallkomponente gebildet.

Die Metallkomponente ist vorzugsweise ein Hohlkörper (beispielsweise ein hohler Stift bzw. ein Pin), der mittig in der zweiten Wirkstufe bzw. der Hartgummikomponente angeordnet ist. Die Metallkomponente wird dazu passgenau in die Gummikomponente eingefügt. Erfindungsgemäß ist auch hier eine Rastverbindung der zweiten Wirkstufe zur dritten Wirkstufe vorgesehen. Die Metallkomponente kann natürlich auch als Vollkörper ausgeführt sein.

Insofern ist erfindungsgemäß vorgesehen, dass die drei Komponenten bzw. Wirkstufen miteinander verrastet sind, wobei die erste Wirkstufe mit der zweiten Wirkstufe und die zweite Wirkstufe mit der dritten Wirkstufe verrastet ist.

Die Metallkomponente kann aus allen dem Fachmann bekannten und geeigneten, insbesondere harten, wenig verformbaren Metallen hergestellt werden.

Die Metallkomponente, bzw. die dritte Wirkstufe begrenzt durch einen Metall-an-Metall Kontakt mit der Aufnahme für die Schraubenfeder und dem Teller bzw. dem Federtopf den Federweg der Schraubenfeder. Der Metallkomponente kommt die besondere Funktion zu, dass diese bei entsprechenden Fahrbahnstößen verhindert, dass das Rad an den Radkasten anstößt. Wird die Gummikomponente (und zuvor die erste Wirkstufe) zu stark zusammengedrückt, so kommt es zu einem Metall an Metall Kontakt (MTM-Kontakt; MTM: metal to metal), d.h. der Federweg wird durch die Metallkomponente begrenzt. Dieser MTM-Konakt ist günstiger Weise als Endanschlag ausgeführt, welcher im normalen Betrieb nicht, sondern nur im Notfall wirkt, wenn das Rad droht an den Radkasten oder an anderen Komponenten anzustoßen.

Das Zusatzfederelement insbesondere mit seinem ersten beiden Wirkstufen ist so ausgelegt, dass ein Vielfaches der maximalen Achslast (beispielsweise die 2, 5, 7 oder 10 fache Achslast) erreicht werden kann, bevor der MTM-Kontakt eintritt.

Günstig im Sinne der Erfindung ist, dass das Zusatzfederelement einen mittigen Kanal (bzw. eine Aussparung) aufweist, welcher das Zusatzfederelement, also die Kunststoffkomponente, die Gummikomponente und die Metallkomponente bzw. die drei Wirkstufen mittig durchgreift.

Insgesamt wird mit der Erfindung ein Drei-Komponenten Zusatzfederelement zur Verfügung gestellt, welches mit seinen drei Wirkstufen, insbesondere mit der dritten Wirkstufe ein Anschlagen des Rades z.B. an dem Radkasten verhindert. Damit wird der Metall-an-Metall Kontakt vorteilhaft in dem Zusatzfederelement integriert, so dass dieses in seiner Funktion erweitert ist. Das Zusatzfederelement bewirkt, bezogen auf die Schraubenfeder, nicht nur eine veränderte Federprogression, sondern begrenzt den Federweg auch so, dass quasi ein Endanschlag gebildet ist.

Weitere vorteilhafte Ausgestaltungen der Erfindung sind in den Unteransprüchen und der folgenden Figurenbeschreibung offenbart. Es zeigen
- Fig. 1: einen Längsschnitt durch eine bekannte Ausführungsform eines Zusatzfederelements nach dem Stand der Technik,
- Fig. 2: einen Längsschnitt durch eine weitere bekannte Ausführungsform eines Zusatzelements nach dem Stand der Technik,
- Fig. 3-5: Längsschnitte durch verschiedene Ausführungsformen eines erfindungsgemäßen Zusatzfederelements,
- Fig. 6: einen Längsschnitt durch eine Radaufhängung mit einem in einer Schraubenfeder integrierten Zusatzfederelement,
- Fig. 7: einen Längsschnitt durch ein erfindungsgemäßes Zusatzfederelement im gestauchten Zustand, und
- Fig. 8: ein Diagramm in dem die Kraft in Abhängigkeit von der Beweglichkeit eines Rades aufgetragen ist.

In den unterschiedlichen Figuren sind gleiche Teile stets mit denselben Bezugszeichen versehen, so daß diese in der Regel auch nur einmal beschrieben werden.

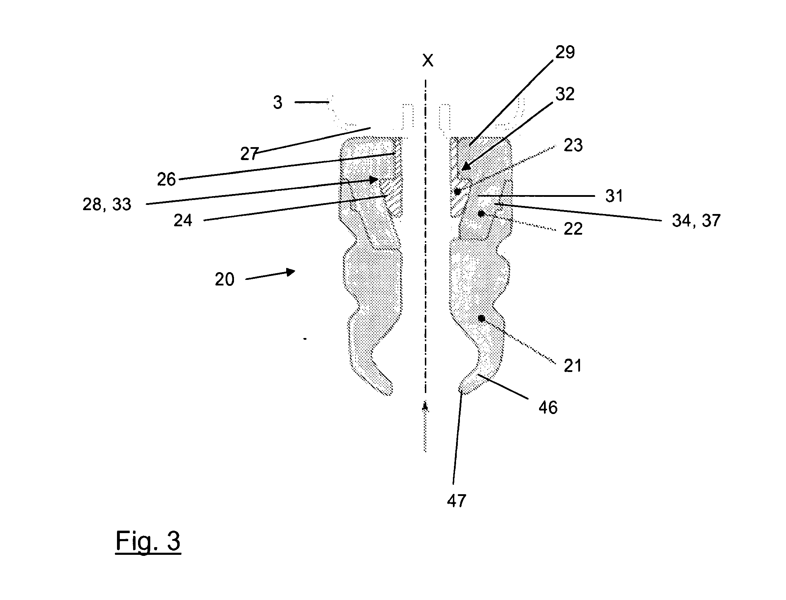

Die Figuren 3, 4 und 5 zeigen Längsschnitte durch verschiedene Ausführungsformen eines erfindungsgemäßen Zusatzfederelements 20. Das erfindungsgemäße Zusatzfederelement 20 weist drei Wirkstufen 21, 22 und 23 auf. Die jeweils in der Zeichnungsebene linken und rechten Ausgestaltungsbeispiele der Figuren 3 bis 5 weisen unterschiedliche Beispiele, insbesondere der zweiten Wirkstufe 22 auf. Die erste Wirkstufe 21 ist durch eine Kunststoffkomponente, bevorzugt aus einem Polyurethanschaum (PU) gebildet. Die zweite Wirkstufe 22 ist durch eine Gummikomponente vorzugsweise aus einem Hartgummi gebildet. Die dritte Wirkstufe 23 wird durch eine Metallkomponente gebildet.

Als erste Wirkstufe 21 tritt die Kunststoffkomponente, die beispielsweise aus Polyurethan hergestellt ist, in Eingriff und bewirkt einen weichen Anlauf der Federung zusätzlich zu der Federprogression der Schraubenfeder. Die Kunststoffkomponente bzw. die erste Wirkstufe 21 ist dabei abhängig von den anderen Komponenten einstellbar.

Die zweite Wirkstufe 22, welche durch die Gummikomponente gebildet wird, bewirkt eine weitere Federprogression und nimmt einen erheblichen Kraftanteil auf. Auf die besonderen Ausgestaltungsbeispiele wird weiter unten näher eingegangen.

Die dritte Wirkstufe 23 wird durch die Metallkomponente gebildet, durch die bei entsprechendem Federweg ein MTM-Kontakt bewirkt wird. Durch den MTM-Kontakt wird der Federweg derart begrenzt, dass ein Anstoßen des Rades z.B. an dem Radkasten verhindert wird.

Die dritte Wirkstufe 23 ist bevorzugt als Hohlkörper ausgeführt. In bevorzugter Ausführung weist die dritte Wirkstufe 23 im Längsschnitt gesehen eine im Wesentlichen pilsartige Ausführung mit einem Pilskopf 24 und einem Pilssteg 26 auf. Der Pilssteg 26 ist mit seinem vom Pilskopf abgewandten Fußende an einem Teller 27 bzw. dem Federtopf 3 verbunden. Der Teller 27 kann ebenfalls aus einem Metall gebildet sein.

Der Pilskopf 24 weist eine zum Fußende, also zum Teller 27 orientierte Haltefläche 28 auf, so dass quasi eine Rastkante 28 gebildet ist, welche sich im Längsschnitt gesehen von einer Mittelachse X wegerstreckt.

Die zweite Wirkstufe 22 weist zwei ineinander übergehende Abschnitte 29 und 31 auf. Der erste Abschnitt 29 ist tellerseitig angeordnet und im Längsschnitt gesehen im Wesentlichen beispielhaft rechteckig ausgeführt. Der zweite Abschnitt 31 erstreckt sich von dem ersten Abschnitt 29 in der Zeichnungsebene nach unten.

Allen Ausführungsbeispielen zu den Figuren 3 bis 5 ist gemeinsam, dass im Übergang des ersten Abschnitts 29 zum zweiten Abschnitt 31 eine Stufe 32 gebildet ist, welche als Gegenrastkante 33 angepasst an die Rastkante 28 vorgesehen ist, so dass die zweite Wirkstufe 22 mit der dritten Wirkstufe 23 verrastbar ist.

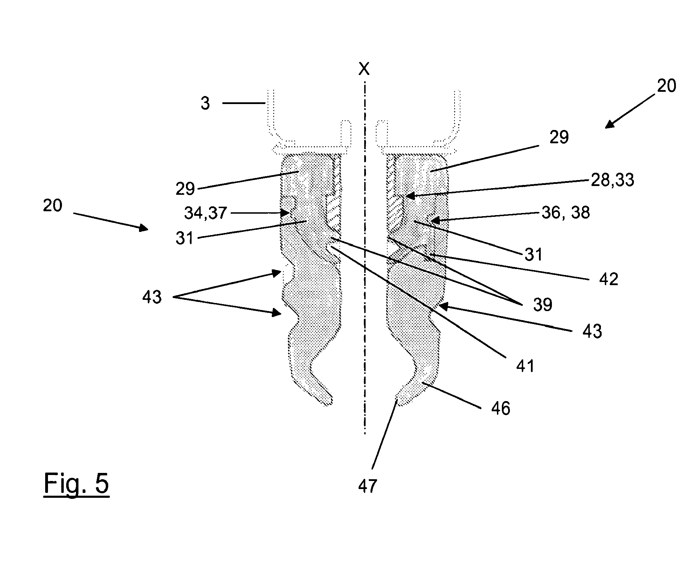

Der zweite Abschnitt 31 weist einen in Richtung zur Mittelachse X orientierten Verlauf, also eine im Wesentlichen konische Ausgestaltung auf. Jeweils in der Zeichnungsebene außenseitig ist ein Rastmittel 34, 36 angeordnet, welches mit entsprechenden Gegenrastmitteln 37, 38 der ersten Wirkstufe 21 zusammenwirkt. Bei den Ausführungsbeispielen nach den Figuren 3, 4 und 5, linke Zeichnungsebene ist das Rastmittel 34 jeweils als Nase ausgeführt, welche in eine entsprechende Nut (Gegenrastmittel 37) der ersten Wirkstufe 21 eingreift. Bei dem Ausführungsbeispiel zu Figur 5, rechte Zeichnungsebene, ist das Rastmittel 36 als Nut ausgeführt, in welche das Gegenrastmittel 38, welches als entsprechend ausgeführte Nase gebildet ist, eingreift.

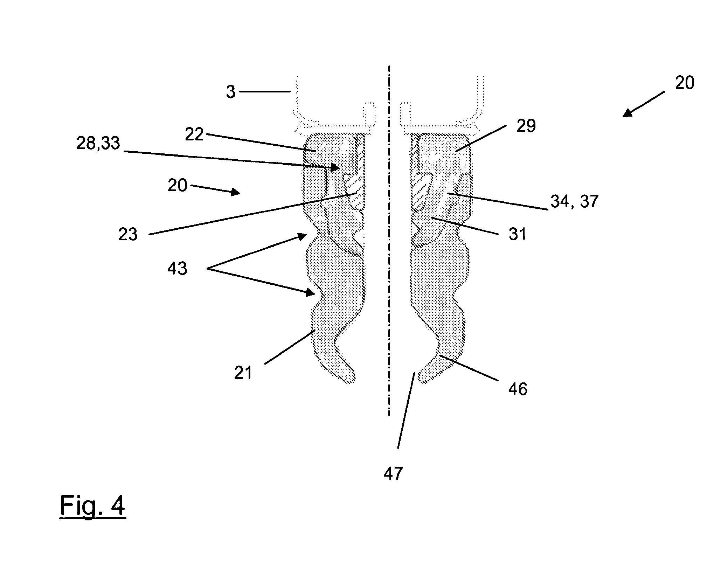

Bei dem Ausführungsbeispiel zu Figur 3, ist der zweite Abschnitt 31 mit einander parallel verlaufenden Seiten ausgeführt. Figur 3, rechte Zeichnungsebene zeigt einen sich im Wesentlichen parallel zur Mittelachse X erstreckenden Absatz auf, der Innenseitig an dem zweiten Abschnitt 31 angeordnet ist. Bei dem in Figur 4 und 5, linke Zeichnungsebene dargestellten Ausführungsbeispiel, ist der zweite Abschnitt 31 leicht gebogen verlaufend ausgeführt, und weist zur Mittelachse X orientierte Lippen 39 jeweils mit dazwischen angeordneter Zwischennut 41 auf. Die Lippen 39 sind beispielhaft auch in Figur 5, rechte Zeichnungsebene vorgesehen. Gegenüberliegend zu den Lippen 39 weist das Ausführungsbeispiel gemäß Figur 5, rechte Zeichnungsebene einen Fortsatz 42 auf.

Alle diese Maßnahmen bewirken für sich allein oder in Kombination miteinander eine besonders gute Verbindung der zweiten Wirkstufe 22 zur dritten Wirkstufe 23 und der ersten Wirkstufe 21 zur zweiten Wirkstufe 22. Das Zusatzfederelement 20 ist bevorzugt über die zweite Wirkstufe 22 mit dem Teller 27 bzw. dem Federtopf 3 hinreichend verbunden.

Die erste Wirkstufe 21 umfasst zumindest den zweiten Abschnitt 31 der zweiten Wirkstufe 22, so dass der zweite Abschnitt 31 vollständig in der ersten Wirkstufe 21 aufgenommen ist. Der erste Abschnitt 29 liegt kopfseitig an dem Teller 27 an, wobei sein Außenumfang bevorzugt bündig zum Außenumfang der ersten Wirkstufe 21 abschließt.

Die erste Wirkstufe 21 weist eine im Wesentlichen hohlzylindrische Ausgestaltung auf, welche außenseitig zumindest eine Materialausnehmung 43 (Figur 5, rechte Zeichnungsebene) bzw. zwei Materialausnehmungen 43 (Figuren 3, 4 und 5, linke Zeichnungsebene) aufweist. Kopfseitig ist die erste Wirkstufe 21 an die Ausgestaltung der zweiten Wirkstufe 22 ausgeführt, um die besonders gute Verbindung zu erreichen. Fußseitig weist die erste Wirkstufe 21 Innenseitig Materialaussparungen 44 auf, so dass quasi Federlippen 46 gebildet sind, welche mit ihrem freien Ende 47 in Richtung zur Mittelachse X orientiert sind. Diese Maßnahmen bewirken für sich allein oder in Kombination miteinander eine Einstellmöglichkeit der Flexibilität der ersten Wirkstufe 21.

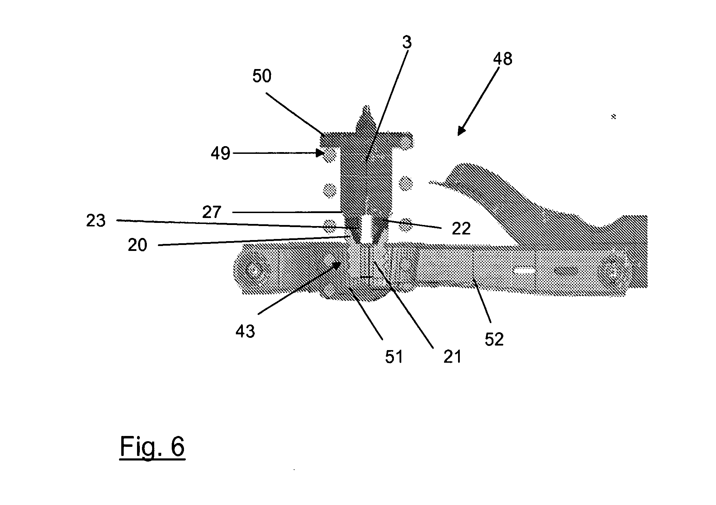

In Figur 6 ist ein Längsschnitt durch eine erfindungsgemäße Radaufhängung 48 dargestellt. Die Radaufhängung 48 weist eine Schraubenfeder 49 auf. In der in Figur 6 gezeigten Ausführungsform ist die Schraubenfeder 49 zwischen dem Federteller 50 und einer Aufnahme 51 für die Schraubenfeder 49 angeordnet. Die Aufnahme 51 für die Schraubenfeder 49 wird dabei durch eine Vertiefung in einem unteren (Quer)Lenker 52 gebildet. In der dargestellten Zeichnungsebene unterhalb des Federtellers 50, mittig in der Schraubenfeder 49, ist der Federtopf 3 gegebenenfalls mit dem Teller 27 und darunter das Zusatzfederelement 20 angeordnet. Oberhalb des Federtopfes 3 können weitere Komponenten der Radaufhängung 48 angeordnet sein, wobei diesbezüglich auf den Stand der Technik verwiesen wird. Das in dem Ausführungsbeispiel nach Figur 6 dargestellte Zusatzfederelement 20 weist im Unterschied zu den Ausgestaltungen nach den Figuren 3 bis 5 drei außenseitig angeordnete Materialausnehmungen 43 auf.

Bei dem in Figur 6 dargestellten Zustand weist die erste Wirkstufe 21 des Zusatzfederelements 20 keinen Kontakt mit der Aufnahme 51 für die Schraubenfeder 49 auf. Erst wenn eine Kraft auf die Schraubenfeder 49 wirkt und einfedert, gelangt die erste Wirkstufe 21 in Kontakt mit der Aufnahme 51.

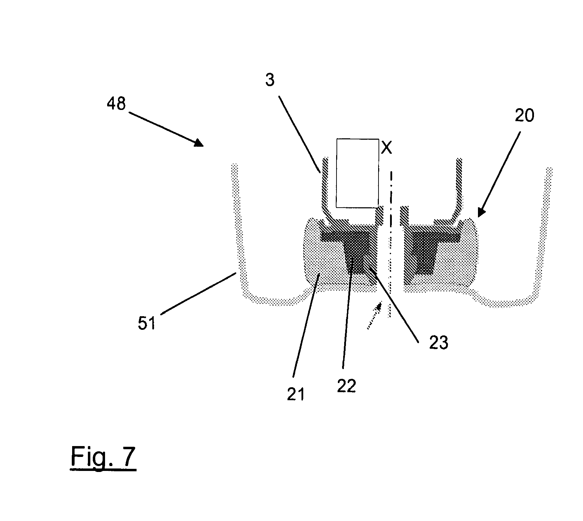

Figur 7 zeigt einen Längsschnitt durch das Zusatzfederelement 20 der erfindungsgemäßen Radaufhängung 48 im Zustand maximaler Komprimierung, bei dem es zu einem MTM-Kontakt zwischen der dritten Wirkstufe 23 und der Aufnahme 51 für die Schraubenfeder 49 kommt, welche hier nicht dargestellt ist. Das Zusatzfederelement 20 wird dabei auf die Länge der pilsartigen Metallkomponente bzw. der dritten Wirkstufe 23 komprimiert. Der MTM-Kontakt für zu einem Endanschlag, durch den der Federweg begrenzt wird.

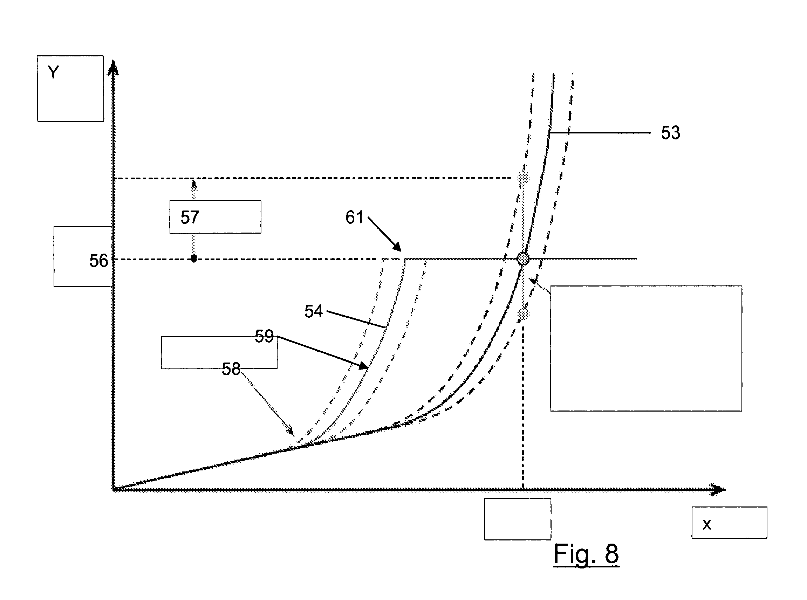

Figur 8 zeigt ein Diagramm in dem die Kraft (x) in Abhängigkeit von dem Federweg eines Rades (y) aufgetragen ist.

Der in der Zeichnungsebene nach rechts, quasi parabelförmig verlaufende Funktionsgraph 53 bezieht sich beispielhaft auf eine Radaufhängung aus dem Stand der Technik. Im Vergleich dazu stellt der in der Zeichnungsebene links dargestellte Funktionsgraph 54 beispielhaft die Radaufhängung 48 mit dem mit den drei Wirkstufen 21, 22 und 23 ausgeführten Zusatzfederelement 20 dar.

Bezüglich des Federweges des in der rechten Zeichnungsebene dargestellten Graphen 53 wird auf den Stand der Technik verweisen. Übersteigt der Federweg des Rades (Graph 53) einen Betrag 56 besteht die Gefahr des Anschlages des Rades an einer Komponente, z.B. an dem Radkasten. Dieser Gefahrenbereich wird in Figur 8 mit dem Bezugszeichen 57 versehen.

Wie in Figur 8 dargestellt (Graph 54), verhindert die dritte Wirkstufe 23 durch den Metall-an-Metall Kontakt ein Überschreiten des Federweges oberhalb des Betrages 56, indem der Federweg eben durch den in dem Zusatzfederelement 20 integrierten Endanschlag begrenzt wird.

Beispielhaft sind in dem Graph 54 Eingriffspunkte 58, 59 und 61 dargestellt. Diese Eingriffspunkte sind natürlich abhängig von der Einstellung der einzelnen Komponenten Schraubenfeder 49 und des Zusatzfederelement 20 mit den drei Wirkstufen 21, 22 und 23.

Von dem Nullpunkt bis zum Eingriffspunkt 58 wirkt die Schraubenfeder 49, wobei zusätzlich ab dem Punkt 58 die erste Wirkstufe 21 des Zusatzfederelementes 20 in Kontakt mit der Aufnahme 51 gelangt, und weiter in Richtung zum Punkt 59 komprimiert wird. Im Bereich zwischen den Punkten 58 und 59 wirkt die erste Wirkstufe 21.

Die erste Wirkstufe 21 bewirkt eine erste Federprogression zusätzlich zu der Federprogression der Schraubenfeder 49, wobei die erste Wirkstufe 21 quasi ein weiches Federgefühl bewirkt. Die erste Wirkstufe 21 ist in ihrer Progessionswirkung unabhängig von der zweiten und dritten Wirkstufe 22 und 23 sowie zur Schraubenfeder 49 einstellbar.

Ab dem Eingriffspunkt 59 kommt die zweite Wirkstufe 22 in Eingriff, und wird entlang des Graphen 54 weiter in Richtung zum Punkt 61 komprimiert. Im Bereich zwischen den Punkten 59 und 61 wirkt die zweite Wirkstufe 22.

Ist die zweite Wirkstufe 22 vollständig komprimiert, gelangt die dritte Wirkstufe 23 bei dem Punkt 61 in Kontakt mit der Aufnahme 51, so dass der Federweg begrenzt ist. Dies ist in Figur 8 mittels des sich in der Zeichnungsebene linear nach rechts erstreckenden Graphen 54 dargestellt. Erkennbar ist, dass keine Gefahr eines Radanschlages besteht, da der Federweg ab dem Punkt 61, also bis zum Betrag 56 begrenzt ist und diesen nicht überschreitet.

Jeweils in der Zeichnungsebene oberhalb und unterhalb des Graphen 54 sind gestrichelte Graphen dargestellt, welche unterschiedliche Einstellmöglichkeiten, also Abstimmungen der einzelnen Komponenten, bevorzugt der ersten Wirkstufe 21 zur zweiten Wirkstufe 22 darstellen sollen.

## Patentansprüche

1. Radaufhängung für ein Kraftfahrzeug, die einen unteren Lenker (52) zur Anbringung eines Rades, eine Schraubenfeder (49), deren ein Ende in einer Aufnahme (51) am Lenker (52) und das dazu gegenüberliegende Ende an einem Federteller (50) angeordnet ist, wobei die Radaufhängung (48) ein dreistufig wirkendes Zusatzfederelement (20) aufweist, wobei die erste Wirkstufe (21) aus einem Kunststoffschaum gebildet ist, wobei die zweite Wirkstufe (22) aus einem bezogen auf die erste Wirkstufe (21) härteren Material gebildet ist, wobei die dritte Wirkstufe (23) aus einem Metall gebildet ist, wobei die erste Wirkstufe (21) die zweite Wirkstufe (22) zumindest abschnittsweise umfasst, wobei die dritte Wirkstufe (23) als Metall an Metall Kontakt wirkt, wenn diese mit der Aufnahme (51) in Kontakt kommt, so dass ein Federweg begrenzt ist,
**dadurch gekennzeichnet, dass**
die zweite Wirkstufe (22) die dritte Wirkstufe (23) vollumfänglich umfasst, und sowohl mit der ersten Wirkstufe (21) als auch mit der dritten Wirkstufe (23) verrastet ist.

2. Radaufhängung nach Anspruch 1,
**dadurch gekennzeichnet, dass**
das Zusatzfederelement (20) mittig innerhalb der Schraubenfeder (49) angeordnet ist.

3. Radaufhängung nach Anspruch 1 oder 2,
**dadurch gekennzeichnet, dass**
die erste Wirkstufe (21) aus einem Polyurethanschaum gebildet ist.

4. Radaufhängung nach einem der vorhergehenden Ansprüche,
**dadurch gekennzeichnet, dass**
die zweite Wirkstufe (22) aus einem Hartgummi gebildet ist.

5. Radaufhängung nach einem der vorhergehenden Ansprüche,
**dadurch gekennzeichnet, dass**
die zweite Wirkstufe (22) zumindest ein Rastmittel (34, 36) und die erste Wirkstufe (21) zumindest ein dazu korrespondierendes Gegenrastmittel (37, 38) zur Verbindung der beiden Wirkstufen (21, 22) miteinander aufweist.

6. Radaufhängung nach einem der vorhergehenden Ansprüche,
**dadurch gekennzeichnet, dass**
die Härte des Kunststoffs der ersten Wirkstufe (21) und die Härte Hartgummikomponente der zweiten Wirkstufe (22) entsprechend der zu erzielenden Federprogression ausgewählt sind.

7. Radaufhängung nach einem der vorhergehenden Ansprüche,
**dadurch gekennzeichnet, dass**
die dritte Wirkstufe (23) aus einem Hohlkörper gebildet ist, welcher mittels einer Rastverbindung mit der zweiten Wirkstufe (22) verbindbar ist.

## Claims

1. Wheel suspension for a motor vehicle, which wheel suspension has a lower link (52) for mounting a wheel, a helical spring (49), of which one end is arranged in a receptacle (51) on the link (52) and the opposite end is arranged on a spring plate (50), wherein the wheel suspension (48) has an auxiliary spring element (20) with a three-stage action, wherein the first action stage (21) is formed from a plastic foam, wherein the second action stage (22) is formed from a material harder than that of the first action stage (21), wherein the third action stage (23) is formed from a metal, wherein the first action stage (21) surrounds the second action stage (22) at least in sections, wherein the third action stage (23) acts so as to generate metal-on-metal contact when it comes into contact with the receptacle (51), such that a spring travel is limited,
**characterized in that**
the second action stage (22) surrounds the third action stage (23) about the entire circumference and is latched both to the first action stage (21) and also to the third action stage (23).

2. Wheel suspension according to Claim 1,
**characterized in that**
the auxiliary spring element (20) is arranged centrally within the helical spring (49).

3. Wheel suspension according to Claim 1 or 2, **characterized in that**
the first action stage (21) is formed from a polyurethane foam.

4. Wheel suspension according to one of the preceding claims,
**characterized in that**
the second action stage (22) is formed from a hard rubber.

5. Wheel suspension according to one of the preceding claims,
**characterized in that**
the second action stage (22) has at least one latching means (34, 36) and the first action stage (21) has at least one corresponding counterpart latching means (37, 38) for the connection of the two action stages (21, 22) to one another.

6. Wheel suspension according to one of the preceding claims,
**characterized in that**
the hardness of the plastic of the first action stage (21) and the hardness of the hard rubber component of the second action stage (22) are selected corresponding to the spring progression to be attained.

7. Wheel suspension according to one of the preceding claims,
**characterized in that**
the third action stage (23) is formed from a hollow body which can be connected to the second action stage (22) by means of a latching connection.

## Revendications

1. Suspension de roue pour un véhicule automobile, qui présente un bras de suspension inférieur (52) pour le montage d'une roue, un ressort hélicoïdal (49), dont une extrémité est disposée dans un logement (51) sur le bras de suspension (52) et dont l'extrémité opposée est disposée sur une cuvette de ressort (50), la suspension de roue (48) présentant un élément de ressort supplémentaire (20) agissant avec trois niveaux, le premier niveau d'action (21) étant constitué par une mousse en plastique, le deuxième niveau d'action (22) étant formé d'un matériau plus dur que celui du premier niveau d'action (21), le premier niveau d'action (21) entourant au moins en partie le deuxième niveau d'action (22), le troisième niveau d'action (23) agissant en tant que contact métal-métal, lorsqu'il vient en contact avec le logement (51), de sorte qu'une course de ressort soit limitée,
**caractérisée en ce que**
le deuxième niveau d'action (22) entoure sur toute sa périphérie le troisième niveau d'action (23), et est emboîté à la fois avec le premier niveau d'action (21) et avec le troisième niveau d'action (23).

2. Suspension de roue selon la revendication 1, **caractérisée en ce que**
l'élément de ressort supplémentaire (20) est disposé centralement à l'intérieur du ressort hélicoïdal (49).

3. Suspension de roue selon la revendication 1 ou 2,
**caractérisée en ce que**
le premier niveau d'action (21) est formé d'une mousse de polyuréthanne.

4. Suspension de roue selon l'une quelconque des revendications précédentes,
**caractérisée en ce que**
le deuxième niveau d'action (22) est formé d'un caoutchouc dur.

5. Suspension de roue selon l'une quelconque des revendications précédentes,
**caractérisée en ce que**
le deuxième niveau d'action (22) présente au moins un moyen d'emboîtement (34, 36) et le premier niveau d'action (21) présente au moins un moyen d'emboîtement conjugué correspondant à celui-ci (37, 38), pour la connexion des deux niveaux d'action (21, 22) l'un à l'autre.

6. Suspension de roue selon l'une quelconque des revendications précédentes,
**caractérisée en ce que**
la dureté du plastique du premier niveau d'action (21) et la dureté du composant de caoutchouc dur du deuxième niveau d'action (22) sont sélectionnées de manière à correspondre à la progression de suspension à obtenir.

7. Suspension de roue selon l'une quelconque des revendications précédentes,
**caractérisée en ce que**
le troisième niveau d'action (23) est formé d'un corps creux qui peut être connecté par une connexion par emboîtement au deuxième niveau d'action (22).
